(19) Europäisches Patentamt
European Patent Office
Office européen des brevets

(11) **EP 1 349 261 B1**

(12) **FASCICULE DE BREVET EUROPEEN**

(45) Date de publication et mention
de la délivrance du brevet:
**21.05.2008 Bulletin 2008/21**

(51) Int Cl.:
***H02K 29/03*** *(2006.01)*

(21) Numéro de dépôt: **03380061.6**

(22) Date de dépôt: **14.03.2003**

(54) **Moteur compact pour ascenseur**

Aufzugmotor in Kompaktbauweise

Compact lift motor

(84) Etats contractants désignés:
**AT BE BG CH CY CZ DE DK EE ES FI FR GB GR
HU IE IT LI LU MC NL PT RO SE SI SK TR**

(30) Priorité: **25.03.2002 ES 200200696**

(43) Date de publication de la demande:
**01.10.2003 Bulletin 2003/40**

(73) Titulaire: **Nork 2, S.I.**
**20306 Irun,**
**Guipuzcoa (ES)**

(72) Inventeurs:
• **Amiano Salaberria, Santiago**
**20306 Irun (Guipuzcoa) (ES)**
• **Fontan Agorreta, Luis**
**20306 Irun (Guipuzcoa) (ES)**

(74) Mandataire: **Urizar Anasagasti, Jesus Maria**
**Po de la Castellana, 72 - 1o**
**28046 Madrid (ES)**

(56) Documents cités:
**EP-A- 0 392 028          DE-A1- 4 133 723**
**US-A- 5 162 685**

• **PATENT ABSTRACTS OF JAPAN vol. 012, no. 425
(E-681), 10 novembre 1988 (1988-11-10) & JP 63
161856 A (NIPPON DENSAN KK), 5 juillet 1988
(1988-07-05)**
• **PATENT ABSTRACTS OF JAPAN vol. 012, no. 099
(E-594), 31 mars 1988 (1988-03-31) & JP 62 230346
A (YASKAWA ELECTRIC MFG CO LTD), 9 octobre
1987 (1987-10-09)**
• **PATENT ABSTRACTS OF JAPAN vol. 2000, no.
23, 10 février 2001 (2001-02-10) & JP 2001 157428
A (MITSUBISHI ELECTRIC CORP), 8 juin 2001
(2001-06-08)**
• **PATENT ABSTRACTS OF JAPAN vol. 018, no. 109
(E-1513), 22 février 1994 (1994-02-22) & JP 05
304737 A (TOSHIBA CORP), 16 novembre 1993
(1993-11-16)**

**Description**

La présente invention, comme son propre titre l'indique, concerne un moteur compact, synchrone, d'aimants permanents, à faibles fluctuations de couple, pour son utilisation dans des ascenseurs. L'invention est donc en rapport avec les machines électriques en général, et les moteurs synchrones d'aimants permanents en particulier; elle est aussi en rapport avec les systèmes d'élévation sans réducteur pour ascenseur sans salle des machines.

Il y a une grande capacité de moteurs électriques, par conséquent, il existe beaucoup de possibilités de traction pour les ascenseurs. Plusieurs de ces possibilités présentent des problèmes, comme la nécessité de courant d'excitation, un système de contrôle compliqué, ou une faible performance. On a obtenu le meilleur résultat en dimension et performance pour le moteur synchrone à aimants permanents, en comptant sur l'avantage additionnel d'avoir d'excellentes possibilités pour son contrôle. Ce moteur présente, de plus, un fonctionnement doux et une précision d'arrêt qui apportent à l'utilisateur une grande commodité et un grand confort lors de son fonctionnement.

Dans un moteur synchrone à aimants permanents axialement mise en place, qui est la disposition la plus habituelle, le rotor cylindrique dispose d'autant d'aimants permanents qu'il est nécessaire pour conformer le nombre de pôles de la machine. Normalement, les aimants présentent un pôle d'un signe, sur la partie la plus extérieure du rotor, et d'un signe opposé sur la partie la plus intérieure. Les aimants sont de plus, espacés pour fournir les pôles « N » et « S » de la machine.

Dans un moteur de ces caractéristiques-ci en entourant le rotor, on trouve le stator, qui est lisse et qui a un nombre indéfini de rainures pour loger les bobines. Celles-ci sont alimentées au moyen d'un système triphasé de courants pour fournir un champ magnétique rotatif qui interagit avec celui du rotor pour produire finalement le mouvement du moteur.

Le circuit magnétique d'une machine synchrone à aimants permanents est composé des plaques du rotor (plus les aimants permanents), l'entrefer et les plaques du stator. Cependant, par la rotation même de la machine, l'entrefer n'est pas toujours totalement homogène, et par conséquent la réluctance du chemin en l'air est plus élevé ou plus faible, en fonction de la position relative des aimants et des rainures. Bien que cela arrive habituellement dans toutes les machines, en tenant compte de la volonté de sa construction le plus proche de la forme cylindrique, dans celle des aimants permanents, il apparaît cet effet de forme beaucoup plus accusée. De cette manière, le phénomène est traduit en un couple fluctuant, dit à réluctance « cogging » « crête » qui perturbe le bon fonctionnement des machines et crée des fluctuations dans la vitesse de rotation et dans le couple d'entraînement de la charge. Bien qu'habituellement le couple de réluctance ou « cogging » est assez faible et que ses effets ne sont pas trop appréciés d'habitude par les utilisateurs des systèmes, il y a certaines applications, comme l'élévation d'une cabine d'ascenseur avec une machine synchrone d'aimants permanents sans réducteur (système d'élévation compact), où ces fluctuations affectent le confort de fonctionnement et elles sont amplifiées dans le système mécanique. Dans lesdites applications, la réduction du couple de réluctance est fondamentale pour que le système soit adéquat.

D'autres problèmes de fluctuation du couple qui ne sont pas en rapport avec celui-ci, apparaissent aussi, mais qui affectent le confort des passagers de l'ascenseur. Précisément, il est important qu'il n'y ait pas d'harmoniques bas dans la courbe de couple, de manière que les fluctuations, si elles existaient, seraient à haute fréquence et probablement, sans effet appréciable sur le couple moyen. Il est important, par conséquent que le bobinage et le nombre de rainures, ainsi que la forme des pôles du rotor soient tels que la forme d'onde de la force magnétomotrice de la machine ait le nombre d'harmoniques le plus faible possible et l'amplitude la plus faible.

D'après ce qui vient d'être exposé, il faut réduire, au minimum possible les fluctuations de couple dans les moteurs synchrones à aimants permanents pour ascenseurs. Pour cette raison, dans cette invention on présente un nouveau moteur synchrone à aimants permanents, où l'on réduit ces problèmes au moyen du changement de la forme de la face externe des aimants permanents, ainsi que par le choix d'un rapport spécial entre le nombre de rainures par phase et pôle et le nombre de pôles de la machine.

Le document JP63161853 concerne un moteur compact, synchrone et à fluctuations réduites de couple, comprenant un rotor d'aimants permanents à coercibilité élevée et un nombre élevé de pôles et avec les aimants permanents axialement mise en place, où le périmètre de la face extérieure n'a pas le même rayon de courbature que la section de l'axe moteur, et un stator lisse avec un nombre de rainures et de dents dépendant du nombre de pôles de la machine, les rapports entre le nombre de rainures par pôles, et le nombre de dents par pôle étant des nombres fractionnaires pour minimiser l'effet du « cogging » lors du couple de la machine.

De sa part le document JP2001157428 décrit un moteur synchrone d'aimants permanents qui a des fluctuations réduites dans son couple, pourvu d'un rotor dans lequel sont installés les aimants permanents et un stator comprenant des dents mises en place dans une partie des positions divisées respectives à des intervalles presque identiques pour se disposer en face du rotor au moyen d'un espace et qui s'étend le long de toute la circonférence dans la direction circonférentielle. Le rapport entre le nombre de pôles de P et le nombre de divisions ou le nombre de dents es de $p/Q > 0.8$, et un rapport entre la largeur $bt1$ à la pointe des dents et une extrémité du pôle p est établi à $bt1/\tau\, p <= 0.8$.

Le brevet DE4133723 décrit un moteur comprenant un stator denté dans lequel on met en place un rotor, dans lequel les aimants permanents ne sont pas mis en place de la même manière sur la surface de l'enveloppe du rotor, et par conséquent les moments d'arrêt des aimants permanents individuels se compensent en bonne mesure les uns aux autres.

L'invention présentée est un moteur synchrone à aimants permanents de 12 ou 16 pôles, qui fournit un couple à la charge avec des fluctuations réduites grâce aux caractéristiques spéciales de la forme des faces externes des aimants permanents et au rapport entre le nombre de rainures par phase et pôle et le nombre de pôles de la machine.

Pour éliminer, dans la mesure du possible, la fluctuation de couple due aux effets des harmoniques dans l'onde de force magnétomotrice, on utilise un bobinage à double couche, avec une disposition distribuée et celui-ci est asymétrique, fractionnaire et à pas court. Ces caractéristiques d'enroulement sont celles qui présentent la meilleure solution car elles peuvent obtenir la suppression des harmoniques des fréquences produisant des fluctuations appréciables.

Dans les paramètres de conception les plus significatives, on trouve la distribution de l'enroulement, le nombre de rainures par pôles et phase du moteur, l'épaisseur des dents et des rainures et la forme des aimants de la machine. Ces facteurs ne sont pas indépendants entre eux, mais en choisissant l'un d'eux, le reste demeure fixé ; par exemple, si on adopte un nombre de rainures et une dimension déterminée pour le moteur, on établit aussi l'épaisseur des dents et des rainures, on limite en outre, en grande mesure, la disposition que pourra adopter le bobinage.

Les moteurs à aimants permanents du type concerné dans cette invention présentent le contenu le plus faible d'harmoniques, compte tenu de l'utilisation d'un nombre de rainures par phase et par pôle de la machine le plus fractionnaire possible. De cette manière on a contribué à ce que l'asymétrie supprime les harmoniques (les distorsions des rainures ne se produisent pas toujours au même point de l'onde de flux). Les harmoniques sont, de préférence, d'ordre impair et à grandeur inférieure, étant donné qu'il n'y a pas autant de fréquence de répétition dans les distorsions.

Pour discriminer entre les valeurs concrètes de nombres de rainures, il faut tenir compte du fait que plus l'épaisseur de la dent est grande, plus la surface où est produite la variation du flux, selon le changement relatif entre le rotor et le stator. Ainsi, on accuse plus l'effet des rainures, et les efforts latéraux alternatifs pouvant être avoir lieu, auront une grandeur plus importante, en tendant à incrémenter le niveau d'harmonique dans la machine. L'épaisseur de la dent doit aussi être suffisant pour canaliser le flux total de la machine sans atteindre la saturation.

En tenant compte de ce qui vient d'être exposé, on a déterminé la valeur optimale de rainures pour une application déterminée. Dans le cas à 12 pôles, on utilise 51 rainures et un bobinage à double couche, avec une disposition distribuée asymétrique, fractionnaire et à pas réduit. Dans le cas à 16 pôles, on utilise 69 rainures et un bobinage à double couche, distribué, asymétrique, fractionnaire et à pas réduit.

Par ailleurs, on a étudié la réduction des harmoniques en modifiant la face extérieure des aimants, et en créant un entrefer variable. Avec cette mesure, on a obtenu la réduction des effets de bord qui font partie du phénomène du « cogging. On a pris une courbure telle que le rayon extérieur des aimants soit :

$$\text{Rayon} = \text{rayon rotor}/1.6$$

Avec cet aimant, on obtient la réduction de la distorsion provoquée par les harmoniques et, par contre, la performance globale du moteur est à peine affectée.

Une exposition détaillée d'un exemple pratique de réalisation permettra une meilleure compréhension de celui-ci, ladite description est réalisée sur la base des dessins du plan annexé, où :

La figure 1 montre une perspective d'un moteur (30) qui s'ajuste à la présente invention.
La figure 2 représente une section transversale du moteur, formé par le stator (20) et le rotor (10).
La figure 3 montre une vue sur laquelle on voit le nombre de dents en regard de chaque pôle.
La figure 4a montre une section transversale du rotor et des aimants.
La figure 4b représente un détail d'un aimant (11), avec ses dimensions.
La figure 5 montre un exemple d'un enroulement asymétrique et fractionnaire.
La figure 6 montre une courbe de couple où on observe les fluctuations.

Même lorsque les résultats peuvent s'étendre à un moteur très similaire à 16 pôles, on ne présente que ceux d'un moteur à 12 pôles. Comme il a été dit, l'étendue des conclusions est triviale.

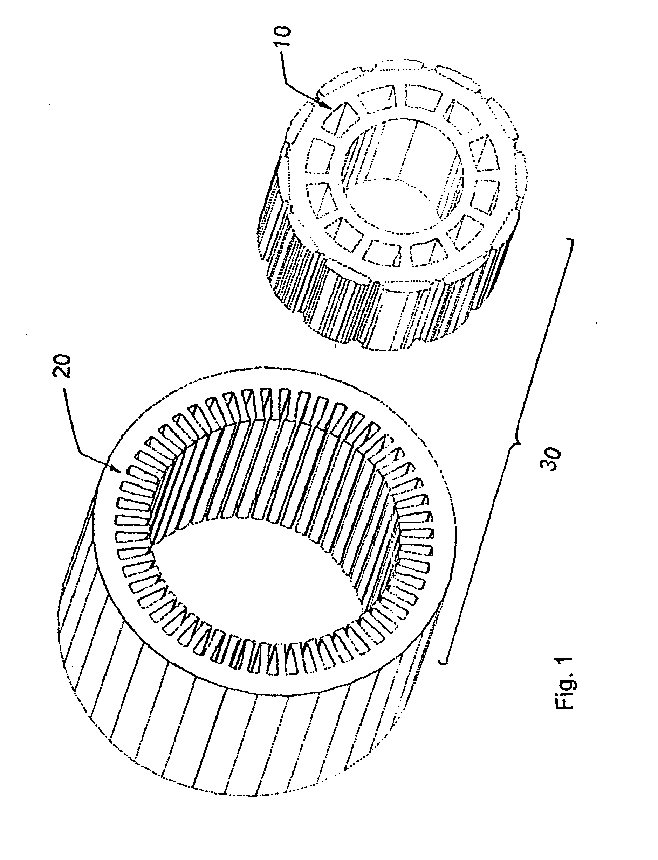

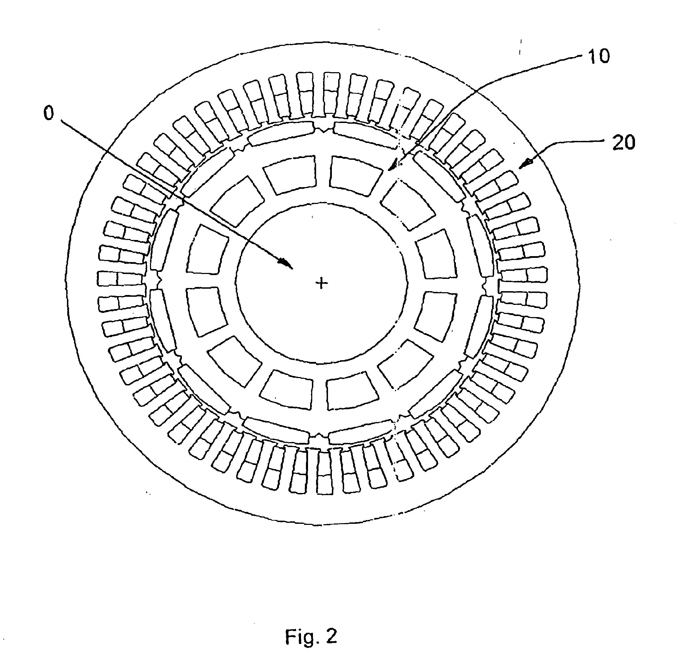

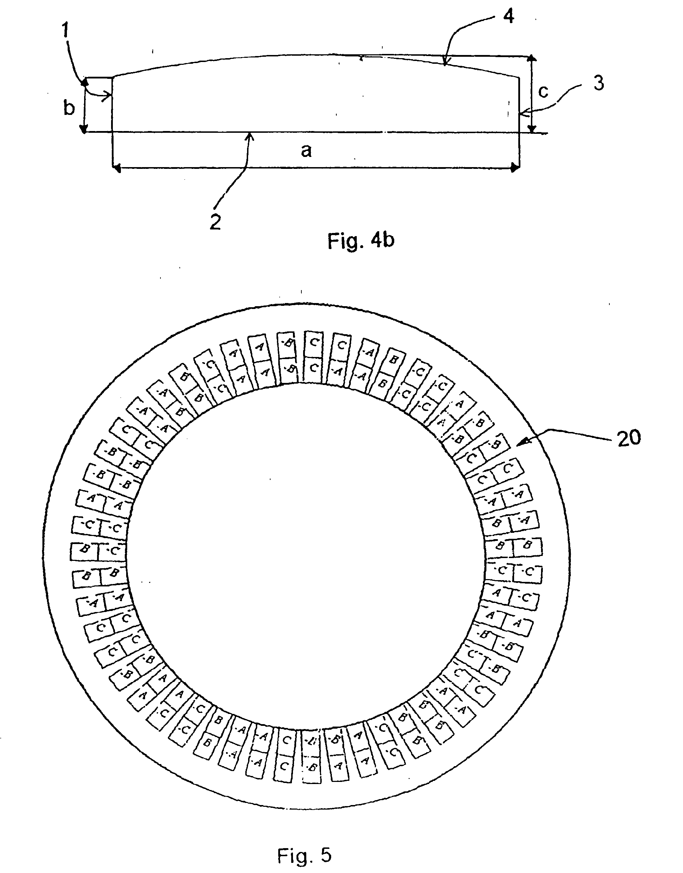

Dans la figure 1, apparaît un moteur (30) selon la présente invention. L'ensemble du moteur est formé par un stator (20) à l'intérieur duquel est monté le rotor (10). Dans la figure 2, on montre une section transversale de l'ensemble monté. Le rotor est accouplé à un axe (0) qui doit transmettre la rotation du rotor. Sur la plaque du rotor sont montés les aimants. Pour faciliter la fixation des aimants sur le rotor, celui-ci doit avoir une forme dodécagonale avec des saillies à la place des sommets qui fournissent à l'ensemble une consistance plus élevé. Les aimants ont une forme de quadrilatère, excepté sur sa face extérieure qui est courbée (figure 4b) et ils ont la même largeur que les faces du rotor de manière que celles-ci s'emboîtent parfaitement.

Le présent moteur a 51 rainures dans le stator et pour former 12 pôles, la meilleure manière de réaliser l'enroulement est celle montré dans la figure 5. Selon cette représentation schématique on a trois phases (A), (B), et (C) et son retour est représenté par -(A), -(B) et -(C) respectivement. Lors de la connexion de chaque phase à un système triphasé, on crée dans l'entrefer du moteur, un champ magnétique rotatif tendant à suivre le rotor.

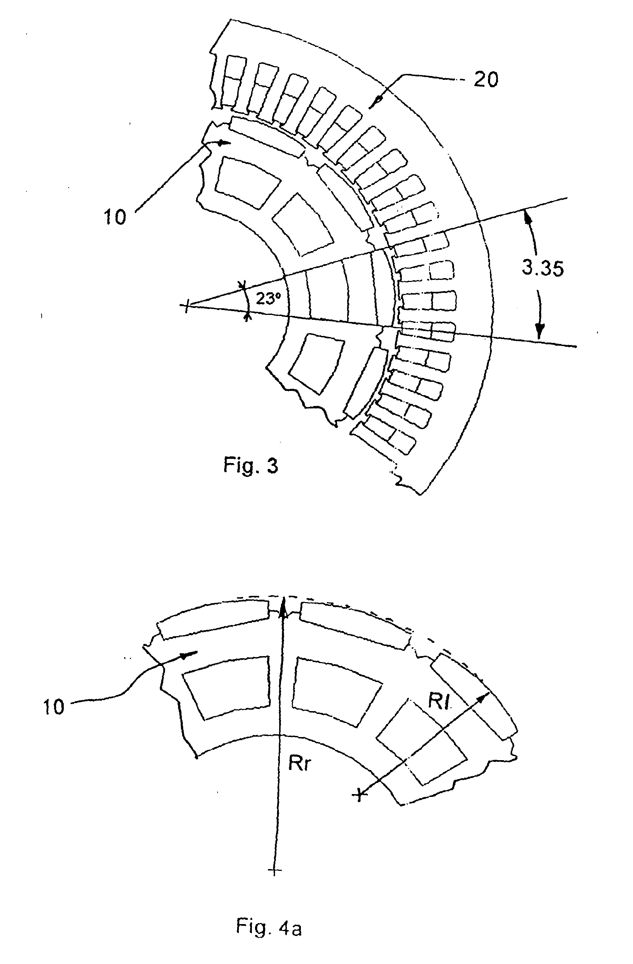

Dans la figure 3, on représente le nombre de dents s'opposant à chaque pôle. Ce nombre doit être fractionnaire et les meilleurs résultats ont été obtenus pour une valeur de 3,35. De même, le nombre de rainures par pôles et phase doit être un nombre fractionnaire ou irrationnel, les meilleurs résultats ayant eu lieu pour la valeur de 1,4167.

La figure 4a montre la forme de la plaque du rotor et la manière où sont montés les aimants sur celle-ci. La plaque a le même nombre de creux que le moteur a de pôles. On observe que pour obtenir un entrefer variable, il suffit de monter un aimant dont le rayon de courbure (RI) est inférieur au rayon maximal de l'ensemble rotor-aimants (Rr). Après les analyses réalisées, on a obtenu une valeur pour ce rapport, entre les rayons, d'environ 1.6.

Dans la figure 4b, il y a un détail de la forme des aimants. Les faces (1), (2) et (3) sont celles qui seront en contact des plaques du rotor. Ces faces sont plates, de manière à s'emboîter dans la forme des plaques et elles se fixent au moyen de vis, de manière que l'on obtient une consistance suffisante pour les efforts à supporter. La face 4 est la face courbée et son rayon RI sera très important pour diminuer l'effet du « cogging ». Le rapport entre les dimensions (b) et (c) sera fonction de RI et la largeur (a), On obtient les meilleurs résultats pour c/b = 1.28.

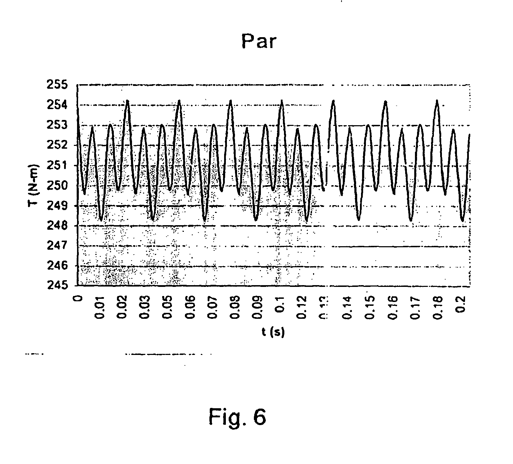

La figure 6 est une représentation de la courbe de couple du moteur à 12 pôles. Comme on peut observer, les oscillations du couple ne sont pas éliminées, mais on arrive à réduire considérablement son importance. Le moteur représenté, fournit un couple avec une réduction en un quart des oscillations.

On ne considère pas nécessaire de faire une description plus étendue pour que tout expert en la matière comprenne l'importance de l'invention et les avantages dérivés de celles-ci.

Les termes de la rédaction de ce mémoire devront toujours être pris dans le sens le plus large et non pas limitatif.

Les matériaux, forme et disposition des éléments seront susceptibles de varier, toutefois que cela ne suppose pas une modification des caractéristiques essentielles de l'invention, revendiquées à la suite :

**Revendications**

**1.** Moteur compact pour ascenseur, synchrone et à fluctuations réduites de couple composé de : a) un rotor (10) à aimants permanents à coercibilité élevée, et à nombre élevé de pôles, avec les aimants permanents orientés axialement et mis en place sur la surface radiale extérieure d'un noyau du rotor, le périmètre de la face extérieure courbé de chacun de dits aimants n'a pas le même rayon de courbure que la circonférence extérieure de l'ensemble noyau du rotor-aimants, et b) un stator (20) lisse avec un nombre de rainures et de dents dépendant du nombre de pôles de la machine, **caractérisé en ce que** le périmètre de la face extérieure de chacun de dits aimants permanents du rotor (10) n'a pas le même centre de courbure que la circonférence extérieure de l'ensemble noyau du rotor-aimants, le rapport entre le rayon de courbure de la circonférence extérieure de l'ensemble noyau du rotor-aimants (Rr) et celui de la face extérieure de chacun des aimants permanents (R1) étant d'environ 1,6 pour obtenir les meilleurs résultats en ce qui concerne la réduction des fluctuations ; également le nombre de dites rainures du stator par pôle du rotor et phase est un nombre irrationnel ou fractionnaire ayant la valeur de 1.4167 ; tandis que le nombre de dents du stator par pôle du rotor est également un nombre fractionnaire et a une valeur de 3.35 pour obtenir une réduction de la fluctuation du couple par l'effet du «cogging».

**Claims**

**1.** A compact synchronous motor for an elevator with reduced torque fluctuations made up of: a) a permanent magnet rotor (10) with high coercivity and with a high number of poles, with the permanent magnets oriented axially and placed on the outer radial surface of a rotor hub, wherein the perimeter of the curved outer face of each of said magnets does not have the save radius of curvature as the outer circumference of the rotor hub-magnet assembly, and b) a smooth stator (20) with a number of grooves and of teeth depending on the number of poles of the machine, **characterized in that** the perimeter of the outer face of each of said permanent magnets of the rotor (10) does not have the same center of curvature as the outer circumference of the rotor hub-magnet assembly, the ratio between the radius of curvature of the outer circumference of the rotor hub-magnet assembly (Rr) and that of the outer face of each of the permanent magnets (R1) being approximately 1.6 to obtain the best results regarding the reduction of fluctuations; likewise, the number of said grooves of the stator per pole of the rotor and phase is an irrational or fractional number having the.value of 1.4167; whereas the number of teeth of the stator per pole of the rotor is also a fractional number and has a value of 3.35 to obtain a reduction of the torque fluctuation due to the cogging effect.

## Patentansprüche

1. Synchroner Kompaktmotor für Aufzüge mit reduzierten Schwankungen des Momentes bestehend aus: a) einem Permanentmagnetrotor (10) mit erhöhter Koerzitivfeldstärke und einer hohen Anzahl von Polen, mit axial ausgerichteten und auf der radialen Außenfläche eines Rotorkemes angebrachten Permanentmagneten, wobei der Umfang der gebogenen Außenseite jedes dieser Magnete einen vom Außenkreis der Rotorkern - Magnete - Anordnung verschiedenen Krümmungsradius aufweist, und b) einem glatten Stator (20) mit einer von der Anzahl der Maschinenpole abhängigen Anzahl von Fugen und Zähnen, **dadurch gekennzeichnet, dass** der Umfang der Außenseite jedes dieser Permanentmagneten des Rotors (10) nicht das gleiche Krümmungszentrum besitzt wie der Außenkreis der Rotorkern - Magnete - Anordnung, wobei die Beziehung zwischen dem Krümmungsradius des Außenkreises der Rotorkern - Magnete - Anordnung (Rr) und dem der Außenseite jedes einzelnen der Permanentmagneten (r1) zur Erzielung der besten Resultate hinsichtlich der Reduzierung der Schwankungen etwa 1,6 beträgt; wobei die·Anzahl der Fugen des Stators pro Rotorpol und Phase ebenfalls eine Bruchzahl oder eine irrationale Zahl mit dem Wert 1,4167 ist; während die Anzahl der Zähne des Stators pro Rotorpol zur Erzielung einer Reduktion der Schwankungen des Momentes aufgrund des "cogging"-Effektes (Nutrastmoment) ebenfalls eine Bruchzahl ist und den Wert 3,35 besitzt.

Fig. 1

Fig. 2

20

10

3.35

23°

Fig. 3

10

RI

Rr

Fig. 4a

Fig. 4b

Fig. 5

## Par

Fig. 6

EP 1 349 261 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 63161853 B
- JP 2001157428 B
- DE 4133723